# EUROPEAN PATENT APPLICATION

(11) **EP 4 783 002 A1**
(43) Date of publication of application: **29.07.2026**
(21) Application number: 24876055.5
(22) Date of filing: 05.06.2024
(51) Int. Cl.: G06F 9/50

(54) **TASK PROCESSING METHOD AND APPARATUS**

(30) Priority: 09.10.2023 CN 202311300824; 20.03.2024 CN 202410323291
(71) Applicant: Huawei Cloud Computing Technologies Co., Ltd., Gui'an New District, Guizhou 550025 (CN)
(72) Inventor: ZHAO, Kunlei, Guiyang, Guizhou 550025 (CN); YANG, Muming, Guiyang, Guizhou 550025 (CN); SHYSHOU, Aliaksandr, Guiyang, Guizhou 550025 (CN)
(74) Representative: Goddar, Heinz J.
(86) International application number: PCT/CN2024/097470
(87) International publication number: WO 2025/077229

(57) **Abstract**

Embodiments of this application disclose a task processing method and apparatus, to improve task processing efficiency of a compute device. The method in embodiments of this application includes: A compute device obtains a mathematical model expression and instance data of a to-be-solved problem, where the mathematical model expression includes an objective function or a constraint condition, and the instance data indicates a value of a coefficient of the mathematical model expression; decomposes the to-be-solved problem into N subproblems based on the mathematical model expression and the instance data of the to-be-solved problem; and allocates, based on a computation amount of each of the N subproblems, the N subproblems to M threads for parallel execution, where N is greater than M, each of the M threads processes one or more subproblems, and a difference between computation amounts required by the M threads for respectively processing the one or more subproblems is less than or equal to a preset threshold.

## Description

This application claims priorities to Chinese Patent Application No. 202311300824.6, filed with China National Intellectual Property Administration on October 9, 2023 and entitled "MATHEMATICAL SOLVING METHOD AND APPARATUS, AND SYSTEM", and to Chinese Patent Application No. 202410323291.1, filed with China National Intellectual Property Administration on March 20, 2024 and entitled "TASK PROCESSING METHOD AND APPARATUS", both of which are incorporated herein by reference in their entireties.

### TECHNICAL FIELD

Embodiments of this application relate to the computer field, and in particular, to a task processing method and apparatus.

### BACKGROUND

A mixed-integer programming (mixed-integer programming, MIP) problem determines a suitable decision-making scheme based on computation of a compute device when a set of linear constraints and objective functions are given. In the MIP problem, some decision variables need to be set to integer values. These integer variables typically represent actual choices or limitations in a decision. Therefore, the MIP problem can be applied to various practical scenarios, such as production planning, logistics scheduling, resource allocation, and project management.

In a current MIP problem solving process, to improve solving efficiency of a compute device for an MIP problem, the compute device usually performs processing in a parallel task processing manner. For example, in a computational process, the compute device first generates a task sequence corresponding to the MIP problem, calculates estimated solving time required for each task in the sequence, and allocates, based on the estimated solving time for each task, the tasks to different threads for execution, to implement parallel solving of the tasks.

However, in a current parallel task processing process, a compute device usually allocates, according to a preconfigured task allocation rule, tasks corresponding to a problem to be solved to different threads for parallel processing. Because the compute device may generate a new subtask in the task processing process, task processing loads of different threads are unbalanced when the compute device performs task scheduling according to the preconfigured allocation rule, leading to low task processing efficiency of the compute device.

### SUMMARY

Embodiments of this application provide a task processing method. A compute device can calculate, based on a solver model of a scheduler, an estimated computation amount of a problem to be solved, so that the problem to be solved is allocated, based on the estimated computation amount in a more balanced manner, to different threads for execution, thereby improving processing efficiency of the compute device for the problem to be solved. Embodiments of this application further provide a task processing apparatus, a compute device, a compute device cluster, a computer-readable storage medium, and a computer program product that correspond to the task processing method.

According to a first aspect, an embodiment of this application provides a task processing method. The method may be performed by a compute device, or may be performed by a component of the compute device, for example, a processor, a chip, or a chip system of the compute device, or may be implemented by a logical module or software that can implement all or a part of functions of the compute device. The method according to the first aspect includes: A compute device obtains a mathematical model expression and instance data of a to-be-solved problem, where the mathematical model expression includes an objective function or a constraint condition, and the instance data indicates a value of a coefficient of the mathematical model expression; the compute device decomposes the to-be-solved problem into N subproblems based on the mathematical model expression and the instance data of the to-be-solved problem; and the compute device allocates, based on a computation amount of each of the N subproblems, the N subproblems to M threads for parallel execution, where N is greater than M, each of the M threads processes one or more subproblems, and a difference between computation amounts required by the M threads for respectively processing the one or more subproblems is less than or equal to a preset threshold.

In this embodiment of this application, the compute device can calculate a computation amount of the to-be-solved problem, and allocate, based on the computation amount of the to-be-solved problem, tasks to different threads for execution, so that total computation amounts of tasks of the different threads are close, thereby improving load balancing of the different threads, and further improving problem solving efficiency of the compute device.

In a possible implementation, the compute device calculates the computation amount of each of the N subproblems based on at least one piece of characteristic information and at least one weight of the N subproblems, where the weight indicates a weight of the at least one piece of characteristic information for calculating the computation amount, the characteristic information includes at least one of a problem type and a depth of each of the N subproblems, and the weight is a parameter determined by a machine model based on the characteristic information.

In this embodiment of this application, the compute device can calculate the computation amount of the subproblem based on the characteristic information and the corresponding weight of the subproblem, thereby improving accuracy of the compute device in estimating the computation amount of the subproblem. Thread scheduling is performed on the subproblem based on the computation amount, thereby further improving load balancing of different threads.

In a possible implementation, the computation amount is indicated based on a quantity of thread iterations or thread processing time. That is, the computation amount may be indicated based on the quantity of thread iterations obtained through estimation, or may be indicated based on the thread processing time estimated by the compute device. This is not specifically limited.

In this embodiment of this application, the compute device may indicate the estimated computation amount of the subproblem through the quantity of thread iterations, or may indicate the estimated computation amount through the thread processing time, thereby improving richness of the solution.

In a possible implementation, in the characteristic information, the characteristic information of the subproblems further includes historical task idle information and a historical task balance degree, the historical task idle information includes idle time after different threads execute a historical subproblem, the historical task balance degree includes a difference between historical computation amounts for executing the historical subproblem by the different threads, and the historical subproblem is a subproblem of a same problem type as the subproblem.

In this embodiment of this application, the compute device can determine the subproblem and calculate the computation amount of the subproblem based on the historical task idle information and the historical task balance degree, thereby improving accuracy in estimating the computation amount of the problem to be solved, and further improving load balancing of the different threads.

In a possible implementation, a difference between total computation amounts of subproblems in task pools corresponding to different threads is less than or equal to the preset threshold. To ensure load balancing of the subproblems allocated to the different threads, the compute device needs to maintain balance between the total computation amounts of the subproblems allocated to the different threads.

In this embodiment of this application, the compute device can maintain the difference between the total computation amounts of the subproblems in the task pools corresponding to the different threads to be less than or equal to a first threshold, thereby improving the load balancing of the different threads.

In a possible implementation, before the compute device obtains a subproblem sequence, the compute device needs to perform modeling on an actual problem to obtain a problem model, and perform preprocessing on the problem model, to obtain a preprocessed simplified problem model. The simplified problem model is a problem model that can be solved by the compute device, and includes the mathematical model expression and the instance data. The compute device performs preliminary solving on the simplified problem model to generate a plurality of subproblem sequences.

In this embodiment of this application, the compute device can perform modeling on an actual problem to obtain a problem model, and perform preprocessing on the problem model, thereby improving solving efficiency of the compute device for the actual problem.

In a possible implementation, when the threads execute the subproblems and generate a plurality of secondary subproblems, the compute device calculates estimated computation amounts of the secondary subproblems based on a weight of a task scheduler, and allocates, based on estimated processing time of the secondary subproblems, the plurality of secondary subproblems to different threads for execution.

In this embodiment of this application, the compute device may generate a plurality of secondary subproblems in a task execution process. The compute device may calculate the estimated computation amounts of the secondary subproblems based on the task scheduler, and schedule the secondary subproblems, thereby improving processing efficiency of the compute device for the secondary subproblems.

In a possible implementation, the threads include a first thread and a second thread, the first thread and the second thread have a shared task pool, subproblems in the shared task pool include a subproblem allocated to the first thread and a subproblem allocated to the second thread, and the compute device reallocates, based on a task synchronizer, the subproblems in the shared task pool to the first thread and the second thread.

In this embodiment of this application, the compute device can reallocate the subproblems in the shared task pool between the two threads, thereby reducing idle time of the threads and improving task processing efficiency of the threads.

In a possible implementation, in a process in which the compute device performs a round of task solving, when the first thread is idle, a subproblem in a task pool corresponding to the second thread is reallocated to the first thread for processing; or when the second thread is idle, a subproblem in a task pool corresponding to the first thread is reallocated to the second thread for execution.

In this embodiment of this application, the compute device can use an idle thread to execute a subproblem of another thread that shares a task pool with the idle thread, thereby improving problem processing efficiency of the compute device.

In a possible implementation, the compute device receives a deterministic parameter configured by a user, where the deterministic parameter is used to control a quantity of iterations of one of the plurality of threads. The compute device may determine, based on the deterministic parameter configured by the user, a termination condition for processing the to-be-solved problem.

In this embodiment of this application, the compute device may receive the deterministic parameter configured by the user, and determine, based on the deterministic parameter configured by the user, the termination condition for processing the to-be-solved problem, thereby improving processing efficiency of the to-be-solved problem.

In a possible implementation, before the compute device calculates the estimated computation amounts of the subproblems based on the characteristic information and the weight, the compute device generates a weight of the characteristic information based on a machine model.

In this embodiment of this application, the compute device can generate the weight of the characteristic information based on the machine model, thereby improving accuracy of the compute device in generating the weight, and further improving calculation accuracy of estimated processing time.

In a possible implementation, the compute device further needs to train the machine model for generating the weight. In a process of training the machine model, the compute device collects characteristic information of a training problem and a weight corresponding to the characteristic information, to generate first training data, where the training problem includes the subproblems and the secondary subproblems, and trains the machine model based on the first training data.

In this embodiment of this application, the compute device can generate the weight of the characteristic information based on the machine model, thereby improving accuracy of the compute device in generating the weight, and further improving calculation accuracy of estimated processing time.

In a possible implementation, a ratio corresponding to the preset threshold is one of 0, 5%, and 10%; or when the computation amount is indicated based on the quantity of thread iterations, the threshold is one of 500 and 1000.

In this embodiment of this application, the compute device may control a difference between estimated time or a difference between quantities of iterations for executing a subproblem by different threads, so that total computation amounts of tasks of the different threads are close, thereby improving load balancing of the different threads, and further improving problem solving efficiency of the compute device.

In a possible implementation, before the compute device calculates the estimated computation amounts of the subproblems based on the characteristic information and the weight, the compute device may alternatively generate the weight based on an inference engine, and the inference engine may generate the weight according to priori knowledge and a rule.

In this embodiment of this application, the compute device can generate the weight based on the inference engine in a task scheduling process, thereby improving accuracy of the compute device in generating the weight, and further improving accuracy of estimated processing time.

In a possible implementation, the compute device may update the knowledge and the rule of the inference engine or train the machine model based on tag data generated by the machine model, or may train the machine model or update the knowledge and the rule of the inference engine based on tag data generated by the inference engine. This is not specifically limited.

In this embodiment of this application, the compute device trains the machine model or updates the knowledge and the rule of the inference engine, thereby improving accuracy of the weight and further improving calculation accuracy of estimated processing time.

According to a second aspect, an embodiment of this application provides a task processing apparatus. The task processing apparatus includes an obtaining unit and a processing unit. The obtaining unit is configured to obtain a mathematical model expression and instance data of a to-be-solved problem, where the mathematical model expression includes an objective function or a constraint condition, and the instance data indicates a value of a coefficient of the mathematical model expression. The processing unit is configured to decompose the to-be-solved problem into N subproblems based on the mathematical model expression and the instance data of the to-be-solved problem. The processing unit is further configured to allocate, based on a computation amount of each of the N subproblems, the N subproblems to M threads for parallel execution, where N is greater than M, each of the M threads processes one or more subproblems, and a difference between computation amounts required by the M threads for respectively processing the one or more subproblems is less than or equal to a preset threshold.

In a possible implementation, the processing unit is further configured to calculate the computation amount of each of the N subproblems based on at least one piece of characteristic information and at least one weight of the N subproblems, where the weight indicates a weight of the at least one piece of characteristic information for calculating the computation amount, and the characteristic information includes at least one of a problem type and a depth of each of the N subproblems.

In a possible implementation, the computation amount is indicated based on a quantity of thread iterations or thread processing time.

In a possible implementation, the depth of the subproblems further includes historical task idle information and a historical task balance degree, the historical task idle information includes idle time after a thread executes a historical subproblem, the historical task balance degree includes a difference between historical computation amounts for executing the historical subproblem by different threads, and the historical subproblem is a subproblem of a same problem type as the subproblem.

In a possible implementation, the threads include a first thread and a second thread, the first thread and the second thread have a shared task pool, subproblems in the shared task pool include a subproblem allocated to the first thread and a subproblem allocated to the second thread, and the processing unit is further configured to reallocate the subproblems in the shared task pool to the first thread or the second thread.

In a possible implementation, the processing unit is specifically configured to: when the first thread is idle, reallocate a subproblem in a task pool corresponding to the second thread to the first thread for processing; or when the second thread is idle, reallocate a subproblem in a task pool corresponding to the first thread to the second thread for processing.

In a possible implementation, the processing unit is specifically configured to generate the weight based on a machine model, where the machine model is a machine model obtained through training based on training data, and the training data includes characteristic information of the historical subproblem and a weight corresponding to the characteristic information.

In a possible implementation, the processing unit is further configured to: when the threads execute the M subproblems and generate a plurality of secondary subproblems, calculate computation amounts of the secondary subproblems based on weights of the secondary subproblems; and allocate the plurality of secondary subproblems to different threads for execution based on the computation amounts of the secondary subproblems.

In a possible implementation, the processing unit is specifically configured to receive a deterministic parameter configured by a user, where the deterministic parameter is used to control a quantity of iterations of one of the plurality of threads.

In a possible implementation, the processing unit is further configured to collect characteristic information of a training problem and a weight corresponding to the characteristic information, to generate first training data, where the training problem includes the subproblems and the secondary subproblems; and train the machine model based on the first training data.

In a possible implementation, the processing unit is further configured to: a ratio corresponding to the preset threshold is one of 0, 5%, and 10%; or when the computation amount is indicated based on the quantity of thread iterations, the threshold is one of 500 and 1000.

According to a third aspect, an embodiment of this application provides a compute device. The compute device includes a processor, the processor is coupled to a memory, and the processor is configured to store instructions. When the instructions are executed by the processor, the compute device is caused to perform the method according to any one of the first aspect or the possible implementations of the first aspect.

According to a fourth aspect, an embodiment of this application provides a compute device cluster. The compute device cluster includes one or more compute devices, the compute device includes a processor, the processor is coupled to a memory, and the processor is configured to store instructions. When the instructions are executed by the processor, the compute device cluster is caused to perform the method according to any one of the first aspect or the possible implementations of the first aspect.

According to a fifth aspect, an embodiment of this application provides a computer-readable storage medium. The computer-readable storage medium stores instructions. When the instructions are executed, a computer is caused to perform the method according to any one of the first aspect or the possible implementations of the first aspect.

According to a sixth aspect, an embodiment of this application provides a computer program product. The computer program product includes instructions. When the instructions are executed, a computer is caused to implement the method according to any one of the first aspect or the possible implementations of the first aspect.

It may be understood that, for beneficial effects that can be achieved by any one of the task processing apparatus, the compute device, the compute device cluster, the computer-readable medium, the computer program product, or the like provided above, refer to beneficial effects in the corresponding method. Details are not described herein again.

### BRIEF DESCRIPTION OF DRAWINGS

FIG. 1 is a diagram of a system architecture of a task processing system according to an embodiment of this application;
FIG. 2 is a schematic flowchart of a task processing method according to an embodiment of this application;
FIG. 3 is a schematic flowchart of another task processing method according to an embodiment of this application;
FIG. 4 is a schematic flowchart of task scheduling according to an embodiment of this application;
FIG. 5 is a schematic flowchart of another task processing method according to an embodiment of this application;
FIG. 6 is a schematic flowchart of another task scheduling according to an embodiment of this application;
FIG. 7 is a schematic flowchart of another task scheduling according to an embodiment of this application;
FIG. 8 is a diagram of a structure of a task processing apparatus according to an embodiment of this application;
FIG. 9 is a diagram of a structure of a compute device according to an embodiment of this application;
FIG. 10 is a diagram of a structure of a compute device cluster according to an embodiment of this application; and
FIG. 11 is a diagram of a structure of another compute device cluster according to an embodiment of this application.

### DESCRIPTION OF EMBODIMENTS

Embodiments of this application provide a task processing method and apparatus, to improve task processing efficiency of a compute device.

In the specification, claims, and accompanying drawings of this application, the terms "first", "second", "third", "fourth", and the like (if existent) are intended to distinguish between similar objects but do not necessarily describe a specific order or sequence. It should be understood that data used in such a way is interchangeable in appropriate circumstances, so that embodiments described herein can be implemented in other orders than the order illustrated or described herein. In addition, the terms "include", "have" and any variant thereof are intended to cover non-exclusive inclusion. For example, a process, method, system, product, or device that includes a series of steps or units is not necessarily limited to those expressly listed steps or units, but may include other steps or units not expressly listed or inherent to the process, method, product, or device.

In embodiments of this application, the terms such as "example" or "for example" are used to represent giving an example, an illustration, or a description. In embodiments of this application, any embodiment or design scheme described with "example" or "for example" should not be explained as being more preferred or having more advantages than another embodiment or design scheme. To be precise, the terms such as "example" or "for example" are used to present a related concept in a specific manner.

First, some terms in embodiments of this application are described, to help a person skilled in the art understand the technical solutions.
mixed-integer programming (mixed-integer programming, MIP) problem is a kind of optimization problem, and is characterized by that a part or all of variables need to be integers. An objective function and a constraint of the MIP problem are linear, and the MIP problem belongs to an NP-hard problem. The MIP is used in many practical scenarios such as capacity planning, resource allocation, and packing.

Priori knowledge (priori knowledge) refers to knowledge that is verified in advance. The priori knowledge may be related knowledge, skills, and experience that a compute device already has before performing a specific task. The knowledge and experience can help a subject to complete a task more effectively, and improve efficiency and accuracy in executing the task. For example, the priori knowledge may be professional knowledge, a concept, a principle, and a rule in a specific field.

To make the technical solutions of this application clearer and easier to understand, the following describes a system architecture of this application with reference to the accompanying drawings.

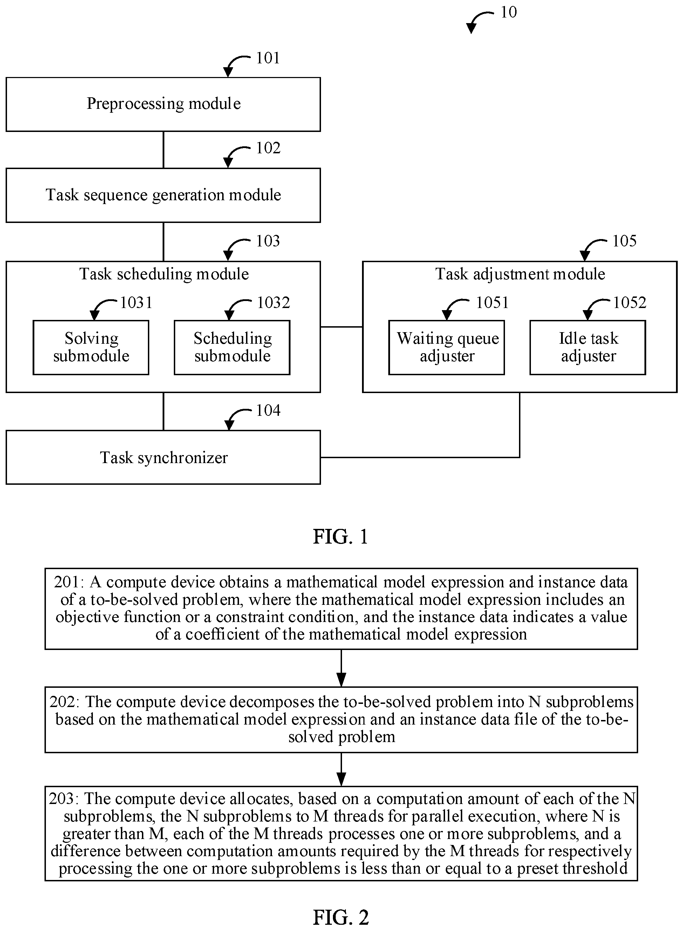

FIG. 1 is a diagram of a system architecture of a task processing system according to an example of this application. In the example shown in FIG. 1, the task processing system 10 includes a preprocessing module 101, a task sequence generation module 102, a task scheduling module 103, a task synchronizer 104, and a task adjustment module 105. The following describes functions of the modules.

The preprocessing module 101 is configured to receive a problem model, and perform preprocessing on the problem model. The preprocessing includes simplifying the problem model to obtain a simplified problem model, where the simplified problem model has fewer variables or constraint conditions than the original problem model. For example, the preprocessing module 101 may delete a constraint condition irrelevant to or redundant to the original problem model, combine equivalent variables, and the like.

The task sequence generation module 102 is configured to perform preliminary solving on the simplified problem model, to obtain a subproblem sequence corresponding to the simplified problem model. The subproblem sequence may also be referred to as a task sequence. The solving process is in a serial manner, and subproblems corresponding to the problem model may be obtained through solving, and the task sequence may be generated based on the subproblems. The task sequence generation module 102 sends the task sequence to the task scheduling module 103, and the task scheduling module 103 may further schedule and solve the subproblems in the task sequence.

The task scheduling module 103 is configured to schedule the subproblems in the task sequence. The task scheduling module 103 may schedule the subproblems in the task sequence to a plurality of threads, and the subproblems in the task sequence are processed in parallel by the plurality of threads.

The task scheduling module 103 includes a solving submodule 1031 and a scheduling submodule 1032. The solving submodule 1031 is configured to determine a weight corresponding to characteristic information of the subproblems, where the weight may also be referred to as a solving parameter, and calculate an estimated computation amount of a task based on the weight. The scheduling submodule 1032 is configured to schedule the subproblems, and allocate the subproblems to different threads for execution. The scheduling submodule 1032 may perform task scheduling based on estimated computation amounts of the subproblems, so that estimated computation amounts of tasks of the different threads are close or the same.

The task synchronizer 104 is configured to implement mutual waiting and communication between threads, and control an execution order of the subproblems of the different threads. For example, the task synchronizer 104 may implement orderly execution of the subproblems of the different threads by controlling access permissions of the threads. The task synchronizer 104 is further configured to reallocate subproblems between affinity threads, where the affinity threads are two threads having a shared task pool.

The task adjustment module 105 is configured to adjust a subproblem that is not scheduled by the task scheduling module 103. The subproblem that is not scheduled includes a level-1 subproblem in the task sequence received by the task scheduling module 103 and a secondary subproblem generated by the threads in a task execution process.

The task adjustment module 105 includes a waiting queue adjuster 1051 and an idle task adjuster 1052. The waiting queue adjuster 1051 is configured to adjust the subproblem that is in a task queue and that is not scheduled by the task scheduling module 103, that is, sort the subproblem that is not scheduled, and wait for scheduling by the task scheduling module 103. The idle task adjuster 1052 is configured to adjust an idle secondary subproblem generated in the task execution process of the threads. The idle secondary subproblem is a secondary subproblem that is not processed and that exceeds a quantity of tasks that can be processed by the threads. The idle task adjuster 1052 may add the idle secondary subproblem to the task sequence again, and the task scheduling module 103 schedules the secondary subproblem.

It should be noted that, the modules of the task processing system 10 may be implemented through software, or may be implemented through hardware. This is not specifically limited. When the modules of the task processing system 10 are implemented through software, the task processing system 10 may be an application program running on a compute device. When the task processing system 10 is implemented through hardware, each module in the task processing system 10 may be a compute device, a processing circuit, or the like.

Based on the task processing system 10 shown in FIG. 1, this application further provides a task processing method. The following describes the task processing method according to embodiments of this application with reference to embodiments.

FIG. 2 is a schematic flowchart of a task processing method according to an embodiment of this application. In an example shown in FIG. 2, the method includes the following steps.

201: A compute device obtains a mathematical model expression and instance data of a to-be-solved problem, where the mathematical model expression includes an objective function or a constraint condition, and the instance data indicates a value of a coefficient of the mathematical model expression.

The compute device obtains the mathematical model expression and the instance data of the to-be-solved problem, where the mathematical model expression includes the objective function or the constraint condition, the instance data indicates the value of the coefficient of the mathematical model expression, and the instance data may be a specific data sample or a case used to validate or apply the mathematical model expression. Specifically, an instance data file may be Excel table data or data of a python dictionary type.

Specifically, the compute device needs to perform modeling on an actual problem to obtain a problem model, and perform preprocessing on the problem model, to obtain a preprocessed simplified problem model. The simplified problem model is the to-be-solved problem of the compute device. Compared with the original problem model, the simplified problem model has fewer variables and constraints. The compute device may represent the to-be-solved problem based on the mathematical model expression.

For example, an actual problem that the compute device needs to solve is a production scheduling problem, and the problem may be described as how to control a production variable to maximize a profit. The compute device may perform preprocessing on the actual problem to obtain a mathematical model expression corresponding to the actual problem, and the compute device may further obtain, based on production information, instance data related to the mathematical model expression.

It should be noted that a problem type of the to-be-solved problem in this embodiment of this application includes an MIP problem, an integer linear programming (integer linear programming, ILP) problem, a binary linear programming (binary linear programming, BLP) problem, a mixed-binary linear programming (mixed-binary linear programming, MBLP) problem, and the like. This is not specifically limited.

202: The compute device decomposes the to-be-solved problem into N subproblems based on the mathematical model expression and the instance data of the to-be-solved problem.

The compute device decomposes the to-be-solved problem into the N subproblems based on the mathematical model expression and the instance data of the to-be-solved problem. The compute device perform preliminary solving on the to-be-solved problem based on the task sequence generation module 102, to obtain one or more subproblems corresponding to the to-be-solved problem. The subproblem may also be referred to as a level-1 subproblem. The subproblems may form a task sequence. The subproblem in this application may also be referred to as a task or a level-1 task.

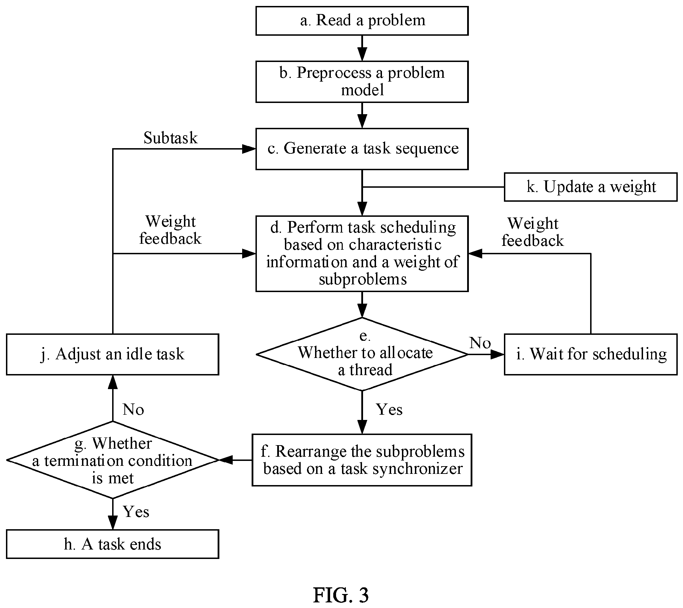

FIG. 3 is a schematic flowchart of a task processing method according to an embodiment of this application. In step a to step c in an example shown in FIG. 3, an actual problem is first read, and modeling is performed on the actual problem to convert the actual problem into a problem model that can be solved by a compute device. Then, the compute device performs preprocessing on the problem model to obtain a preprocessed simplified problem model. The compute device continues to perform preliminary solving on the simplified problem model, to obtain a subproblem sequence corresponding to the simplified problem model.

For example, in an example shown in FIG. 3, when the compute device solves a mixed-integer programming MIP problem, the compute device first determines an objective function and a constraint condition of the MIP problem, and further determines a decision variable and a related parameter that need to be optimized. The decision variable is a variable for which an optimal solution needs to be found in an optimization process, and the related parameter is a constraint condition between decision variables or a coefficient in the objective function. Then, the compute device needs to perform modeling on the MIP problem, and the modeling includes defining the objective function and the constraint condition, and clarifying a value range of the decision variable.

In the example shown in FIG. 3, after performing modeling on the MIP problem, the compute device performs preprocessing on the problem model, thereby improving solving efficiency. The preprocessing performed by the compute device on the problem model includes simplifying the constraint condition and tightening a variable boundary. The simplifying the constraint condition is, for example, performing operations such as combining constraint conditions, deleting a redundant constraint, and converting the constraint condition into an equivalent form. The tightening the variable boundary is, for example, tightening the value range of the decision variable, and setting more compact and more appropriate upper and lower bounds.

203: The compute device allocates, based on a computation amount of each of the N subproblems, the N subproblems to M threads for parallel execution, where N is greater than M, each of the M threads processes one or more subproblems, and a difference between computation amounts required by the M threads for respectively processing the one or more subproblems is less than or equal to a preset threshold.

After decomposing the to-be-solved problem into the N subproblems, the compute device allocates, based on the computation amount of each of the N subproblems, the N subproblems to the M threads for parallel execution, where N is greater than M, each of the M threads processes one or more subproblems, and the difference between the computation amounts required by each of the M threads for respectively processing the one or more subproblems is less than or equal to the preset threshold.

Specifically, in a process in which the compute device schedules the N subproblems in the task sequence, the compute device calculates the computation amount of each of the N subproblems based on at least one piece of characteristic information and at least one weight of the N subproblems, where the weight indicates a weight of the at least one piece of characteristic information for calculating the computation amount, and the characteristic information includes at least one of a problem type and a depth of each of the N subproblems. The compute device allocates, in a balanced manner, the subproblems to different threads based on the computation amount of each subproblem, so that a difference between total computation amounts required by the M threads for processing the subproblems is less than or equal to the preset threshold.

The following specifically describes the characteristic information and the weight of the subproblem in embodiments of this application, and a process in which the compute device determines an estimated computation amount of the subproblem based on the characteristic information and the weight of the subproblem.

Before the compute device calculates the estimated computation amount of the subproblem based on the characteristic information and the weight of the subproblem, the compute device needs to train a machine model that generates the weight corresponding to the characteristic information. In a process of training the machine model, the compute device first collects characteristic information of a training problem and weight corresponding to the characteristic information, to generate first training data, and then trains the machine model based on the first training data. After the training of the machine model ends, the compute device may output, based on the machine model, a group of weights corresponding to a group of pieces of characteristic information. The weight is also referred to as a solving parameter or a hyperparameter. The weight indicates a weight of one or more pieces of characteristic information corresponding to the subproblem for a time of calculating the estimated computation amount. Different pieces of characteristic information correspond to different weights.

Still refer to FIG. 3. In step k of the example shown in FIG. 3, after generating the task sequence, the compute device generates a group of weights of each problem based on the trained machine model, and the compute device calculates estimated computation amounts of one or more subproblems in the task sequence based on the weights and the characteristic information, and further performs task scheduling based on the estimated computation amounts.

In a possible implementation, the characteristic information includes task characteristic information and environment characteristic information. The task characteristic information includes a problem type corresponding to a subproblem and a depth of the subproblem. The depth of the task includes historical task idle information and a historical task balance degree. The historical task idle information indicates an idle compute resource released by a thread in a process of solving a historical subproblem, for example, idle time after the thread completes the task. The historical task balance degree indicates a difference degree between historical computation amounts of different threads for executing the historical subproblem, and a relationship between an actual computation amount and an estimated computation amount of the historical subproblem. For example, the historical task balance degree is calculated based on the difference degree between the historical computation amounts of the different threads. The historical subproblem is a subproblem whose problem type is the same as that of the subproblem to be solved. The environment characteristic information includes a configuration and a quantity of concurrent threads of the compute device.

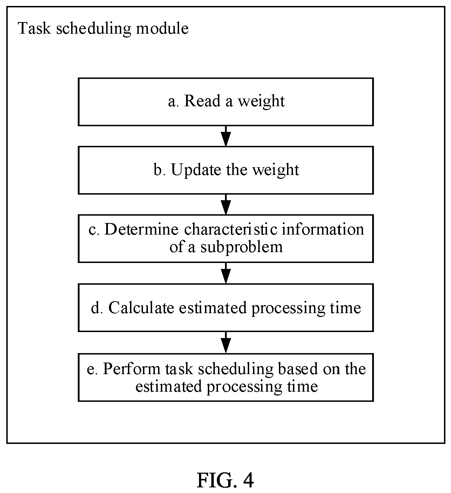

FIG. 4 is a schematic flowchart of task scheduling performed by a task scheduling module according to an embodiment of this application. In step a to step c in an example shown in FIG. 4, the task scheduling module 103 receives a task sequence. Before scheduling subproblems in the task sequence, the task scheduling module 103 determines characteristic information and a weight of the subproblems, and the task scheduling module 103 calculates estimated processing time of each subproblem in the task sequence based on the characteristic information and the weight.

In step d and step e in the example shown in FIG. 4, the compute device calculates the estimated processing time of each subproblem based on the characteristic information and the weight that correspond to the subproblem, where the estimated processing time is maximum time of the compute device in one round of solving. The compute device performs task scheduling based on the estimated processing time.

In a possible implementation, in addition to generating the weight based on the machine model, the compute device may alternatively generate the weight based on an inference engine. The inference engine is configured to generate the weight according to priori knowledge and a rule. The compute device may also optimize inference knowledge and an inference rule of the inference engine based on the weight generated by the machine model as tag data, thereby improving inference accuracy of the inference engine.

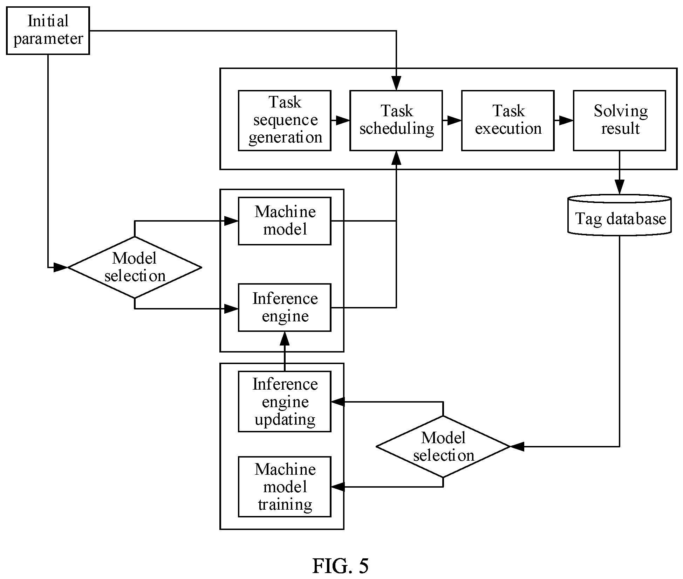

FIG. 5 is a diagram of an optimization procedure of a solving parameter according to an embodiment of this application. In an example shown in FIG. 5, in a task scheduling process, a compute device needs to calculate estimated processing time of a task based on a weight of characteristic information. The compute device may generate the weight of the characteristic information based on a machine model, or may generate the weight of the characteristic information based on a search engine. Before task scheduling, the task scheduling module 103 may select the machine model or an inference engine to generate weights corresponding to different pieces of characteristic information.

In the example shown in FIG. 5, after the compute device enables weight optimization in a task processing process, the compute device may filter data tags based on a task solving result in the task processing process. The data tags may be used as training data of the machine model, or may be used as guidance data for updating a rule and knowledge of the inference engine. For example, the data tags are the characteristic information and the weight corresponding to the characteristic information.

It may be understood that, in the example shown in FIG. 5, the compute device may update the knowledge and the rule of the inference engine or train the machine model based on tag data generated by the machine model, or may train the machine model or update the knowledge and the rule of the inference engine based on tag data generated by the inference engine. This is not specifically limited.

After the compute device obtains an estimated computation amount of each subproblem in a task sequence through calculation, the compute device allocates, based on the estimated computation amount of the subproblem, one or more subproblems in the task sequence to different threads for execution. Specifically, the compute device determines a corresponding thread tag for each subproblem based on the estimated computation amount of the subproblem, and sends the subproblem to a task pool corresponding to the thread tag, so that total estimated computation amounts of task pools of different threads are balanced.

In a possible implementation, a difference between the total estimated computation amounts of tasks in the task pools corresponding to different threads is less than or equal to a preset threshold. That is, to ensure load balancing of tasks allocated to different threads, the compute device needs to maintain balance between total estimated computation amounts of subproblems allocated to the different threads.

The total estimated computation amounts of the tasks in the task pools corresponding to the different threads may be indicated based on a quantity of thread iterations, or may be indicated based on thread processing time. When the computation amount is indicated based on the quantity of thread iterations, the preset threshold may be, for example, 500 or 1000. When the computation amount is indicated based on the quantity of thread iterations, the preset threshold may be, for example, 5 microseconds to 100 microseconds. A ratio corresponding to the preset threshold is, for example, one of 0, 5%, and 10%.

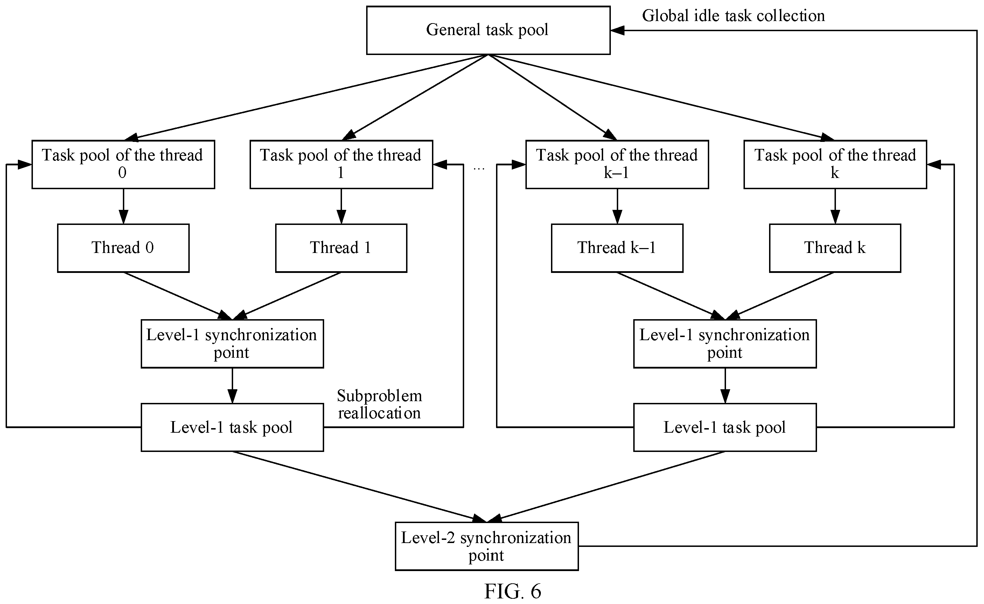

FIG. 6 is a diagram of task scheduling performed by a scheduling module according to an embodiment of this application. In an example shown in FIG. 6, a compute device allocates, based on an estimated computation amount of a task, subproblems to different threads for execution. For example, the compute device allocates subproblems in a general task pool to a task pool corresponding to a thread 0, a task pool corresponding to a thread 1, ..., a task pool corresponding to a thread k-1, and a task pool corresponding to a thread k. A difference between total estimated processing time of the subproblems in the task pools corresponding to the k threads is less than a first threshold.

In a possible implementation, in a process of executing the subproblems, the threads generate new secondary subproblems. When the threads execute a task and generate a plurality of secondary subproblems, the compute device calculates estimated computation amounts of the secondary subproblems based on characteristic information and a weight of the secondary subproblems, and the compute device allocates, based on the estimated computation amounts of the secondary subproblems, the plurality of secondary subproblems to different threads for execution. In this application, the secondary subproblem may also be referred to as a level-2 subproblem, a subtask, or a level-2 task.

It should be noted that, when the plurality of secondary subproblems are generated in the process of executing the subproblems by the threads, when thread tags are not allocated to these secondary subproblems after a round of solving ends, these secondary subproblems may be referred to as idle secondary subproblems. The compute device adds these idle secondary subproblems to a task sequence again through the task adjustment module 105, and the task scheduling module 103 schedules these idle secondary subproblems.

In a possible implementation, the compute device may receive a deterministic parameter configured by a user, where the deterministic parameter is used to control a quantity of iterations of one of the plurality of threads. For example, the deterministic parameter is 9999. The compute device may determine, based on the deterministic parameter configured by the user, a termination condition for processing a to-be-solved problem. For example, when the deterministic parameter is 9999, if the thread has not solved a problem after 9999 iterations, the compute device stops solving the problem.

Still refer to FIG. 3. In step d to step g and step j in the example shown in FIG. 3, in a task execution process, the compute device calculates the estimated computation amounts based on the characteristic information and the weight of the subproblems, and allocates, based on the estimated computation amounts, the subproblems to different threads for execution. The threads may generate new secondary subproblems in the task execution process.

In step f to step h in the example shown in FIG. 3, for the new secondary subproblems generated by the threads in the task execution process, when a thread is idle in a current round of solving, the thread may continue to solve the newly generated secondary subproblems. After the current round of solving ends, if the termination condition of the to-be-solved problem is not met, for a secondary subproblem for which no thread is allocated, the compute device performs idle task adjustment on the secondary subproblem for which no thread is allocated, the compute device adds the secondary subproblem to the task sequence again. After the current round of solving ends, if the termination condition of the to-be-solved problem has been met, the solving ends.

In a possible implementation, in a process in which the compute device executes the subproblems based on a plurality of threads, the compute device may update the task characteristic information based on task execution data. For example, the compute device may update the historical task idle information based on idle time after the threads execute the subproblems, and update the historical task allocation balance degree based on the historical computation amounts of the different threads.

Still refer to FIG. 3. In step i and step j in the example shown in FIG. 3, the task adjustment module 105 of the compute device may update the task characteristic information in the task scheduling module 103 based on data in a task waiting queue, or may update the task characteristic information in the task scheduling module 103 based on data of idle task adjustment. This is not specifically limited.

In a possible implementation, the task scheduler of the compute device needs to perform a plurality of rounds of solving on the subproblems in the task sequence and the secondary subproblems generated by executing the subproblems, where each round of solving is referred to as level-1 solving. After each round of solving is completed, the compute device may perform data synchronization between threads. In addition, the compute device recalculates an estimated computation amount of a subsequent problem, and continues to perform scheduling.

Still refer to FIG. 3. In step i shown in FIG. 3, in a process in which the compute device allocates the thread tags based on the estimated computation amounts, when a quantity of tasks in a task pool corresponding to a thread exceeds a threshold, the task scheduling module 103 of the compute device suspends task scheduling, and tasks in the task sequence need to wait for scheduling by the task scheduling module 103.

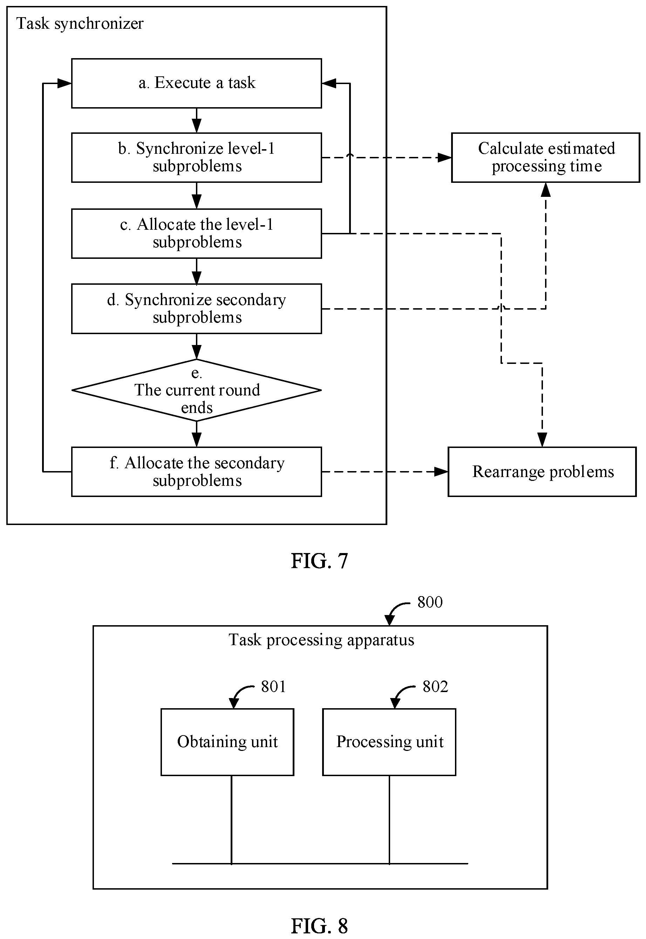

FIG. 7 is a schematic flowchart of level-2 data synchronization according to an embodiment of this application. In step a to step c in an example shown in FIG. 7, a compute device generates a plurality of subproblems in a task execution process. In a first round of solving process of the subproblems, the compute device recalculates estimated processing time of level-1 subproblems while performing task synchronization, and reallocates thread tags based on the estimated processing time of the level-1 subproblems.

In step d to step f in the example shown in FIG. 7, when the compute device performs a second round of solving process of secondary subproblems, the compute device recalculates estimated processing time of the secondary subproblems while performing task synchronization, and reallocates thread tags based on the estimated processing time of the secondary subproblems.

In a possible implementation, the threads include a first thread and a second thread. The first thread and the second thread are affinity threads defined by the compute device. When the first thread and the second thread are affinity threads, the first thread and the second thread have a shared task pool. Tasks in the shared task pool include a task allocated to the first thread and a task allocated to the second thread. The compute device may perform task rearrangement on the tasks in the affinity threads. Specifically, the compute device reallocates subproblems in the shared task pool to the first thread and the second thread based on a task synchronizer.

For example, when execution of a subproblem in a task pool of the first thread is completed and the first thread is idle, the compute device may reallocate a subproblem in a task pool of the second thread to the first thread for execution. Alternatively, when execution of a subproblem in a task pool of the second thread is completed and the second thread is idle, the compute device may reallocate a subproblem in a task pool of the first thread to the second thread for execution.

It should be noted that the affinity threads are a pair of thread defined based on task historical data, and may be used to solve tasks with a high similarity. Therefore, data synchronization may be performed at a high frequency between the pair of affinity threads, thereby improving solving efficiency.

Still refer to FIG. 6. In the example shown in FIG. 6, the thread 0 and the thread 1 are a pair of affinity threads, and inter-thread synchronization may be performed between the thread 0 and the thread 1. The Inter-thread task synchronization indicates that a task execution order of a plurality of threads is controlled through an inter-thread communication mechanism. Because the thread 0 and the thread 1 have a shared task pool, when one of the thread 0 or the thread 1 is idle, the compute device may reallocate a subproblem in the shared task pool, to allocate the subproblem to the idle thread for execution.

In the example shown in FIG. 6, the thread k-1 and the thread k are also a pair of affinity threads, and inter-thread synchronization and task reallocation may be performed between the thread k-1 and the thread k. When one of the thread k-1 and the thread k is idle, the compute device may reallocate a subproblem in a shared task pool, to allocate the subproblem to the idle thread for execution.

In the example shown in FIG. 6, after performing level-1 task solving, the compute device may perform inter-thread synchronization again. For example, after performing the level-1 task solving on the thread 0, the thread 1, ..., the thread k-1, and the thread k of the compute device, inter-thread synchronization may be performed at a level-2 synchronization point.

It may be learned from the foregoing embodiments that, in embodiments of this application, the compute device can calculate an estimated computation amount of a to-be-executed subproblem in the task sequence based on the characteristic information and the weight of the subproblems, and make the total estimated computation amounts of the subproblems of different threads close in a task allocation process, thereby improving load balancing of the different threads and further improving task processing efficiency of the compute device.

Based on the foregoing method embodiments, an embodiment of this application further provides a task processing apparatus. The following specifically describes the task processing apparatus according to embodiments of this application.

FIG. 8 is a diagram of a structure of a task processing apparatus according to an embodiment of this application. In an example shown in FIG. 8, the task processing apparatus 800 is configured to implement the steps performed by the compute device in the foregoing embodiments. The task processing apparatus 800 includes an obtaining unit 801 and a processing unit 802.

The obtaining unit 801 is configured to obtain a mathematical model expression and instance data of a to-be-solved problem, where the mathematical model expression includes an objective function or a constraint condition, and the instance data indicates a value of a coefficient of the mathematical model expression. The processing unit 802 is configured to decompose the to-be-solved problem into N subproblems based on the mathematical model expression and the instance data of the to-be-solved problem. The processing unit 802 is further configured to allocate, based on a computation amount of each of the N subproblems, the N subproblems to M threads for parallel execution, where N is greater than M, each of the M threads processes one or more subproblems, and a difference between computation amount required by the M threads for respectively processing the one or more subproblems is less than or equal to a preset threshold.

In a possible implementation, the processing unit 802 is further configured to calculate the computation amount of each of the N subproblems based on at least one piece of characteristic information and at least one weight of the N subproblems, where the weight indicates a weight of the at least one piece of characteristic information for calculating the computation amount, and the characteristic information includes at least one of a problem type and a depth of each of the N subproblems.

In a possible implementation, the computation amount is indicated based on a quantity of thread iterations or thread processing time.

In a possible implementation, the depth of the subproblems further includes historical task idle information and a historical task balance degree, the historical task idle information includes idle time after a thread executes a historical subproblem, the historical task balance degree includes a difference between historical computation amounts for executing the historical subproblem by different threads, and the historical subproblem is a subproblem of a same problem type as the subproblem.

In a possible implementation, the threads include a first thread and a second thread, the first thread and the second thread have a shared task pool, subproblems in the shared task pool include a subproblem allocated to the first thread and a subproblem allocated to the second thread, and the processing unit 802 is further configured to reallocate the subproblems in the shared task pool to the first thread or the second thread.

In a possible implementation, the processing unit 802 is specifically configured to: when the first thread is idle, reallocate a subproblem in a task pool corresponding to the second thread to the first thread for processing; or when the second thread is idle, reallocate a subproblem in a task pool corresponding to the first thread to the second thread for processing.

In a possible implementation, the processing unit 802 is specifically configured to generate the weight based on a machine model, where the machine model is a machine model obtained through training based on training data, and the training data includes characteristic information of the historical subproblem and a weight corresponding to the characteristic information.

In a possible implementation, the processing unit 802 is further configured to: when the threads execute the M subproblems and generate a plurality of secondary subproblems, calculate computation amounts of the secondary subproblems based on weights of the secondary subproblems; and allocate the plurality of secondary subproblems to different threads for execution based on the computation amounts of the secondary subproblems.

In a possible implementation, the processing unit 802 is specifically configured to receive a deterministic parameter configured by a user, where the deterministic parameter is used to control a quantity of iterations of one of the plurality of threads.

In a possible implementation, the processing unit 802 is further configured to collect characteristic information of a training problem and a weight corresponding to the characteristic information, to generate first training data, where the training problem includes the subproblems and the secondary subproblems; and train the machine model based on the first training data.

In a possible implementation, the processing unit 802 is further configured to: a ratio corresponding to the preset threshold is one of 0, 5%, and 10%; or when the computation amount is indicated based on the quantity of thread iterations, the threshold is one of 500 and 1000.

It may be understood that, the obtaining unit 801 and the processing unit 802 in the task processing apparatus 800 may be used as function modules that are mapped to the modules in the task processing system 10 in FIG. 1, to implement the functions of the modules in the task processing system 10.

It should be understood that division of the units in the foregoing apparatus is merely logical function division. In an actual implementation, all or a part of the units may be integrated into one physical entity, or may be physically separate. In addition, all of the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated, or may be implemented independently. The processing element herein may also be referred to as a processor, and may be an integrated circuit having a signal processing capability. In an implementation process, the steps in the foregoing methods or the foregoing units may be implemented through a hardware integrated logic circuit in a processor element, or may be implemented in the form of software invoked by a processing element.

It should be noted that, for brief description, the foregoing method embodiments are represented as a series of actions. However, a person skilled in the art should know that this application is not limited to the described order of the actions. In addition, a person skilled in the art should also know that all embodiments described in this specification are preferred embodiments, and the related actions are not necessarily mandatory to this application.

Another appropriate step combination that can be figured out by a person skilled in the art based on the content described above also falls within the protection scope of this application. In addition, a person skilled in the art should also appreciate that embodiments described in this specification all belong to preferred embodiments, and the involved actions are not necessarily mandatory to this application.

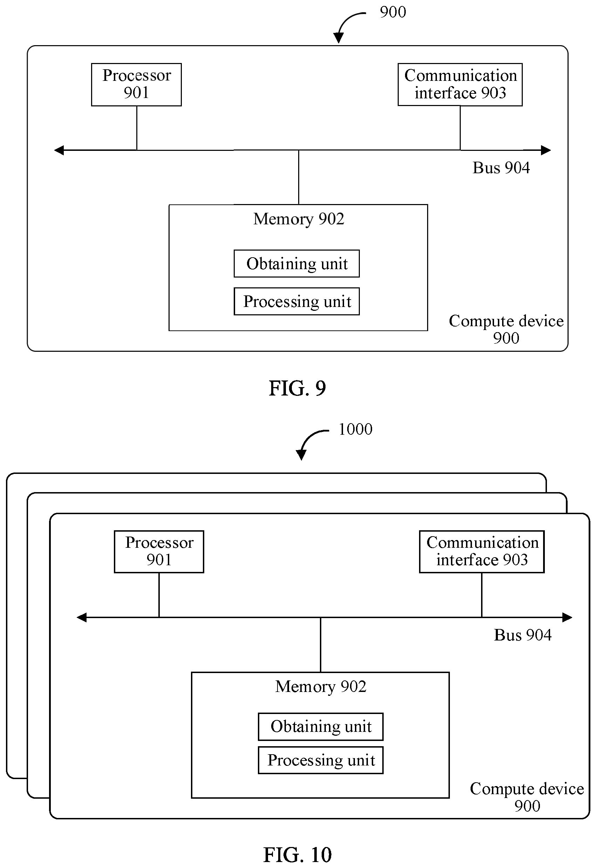

FIG. 9 is a diagram of a structure of a compute device according to an embodiment of this application. As shown in FIG. 9, the compute device 900 includes a processor 901, a memory 902, a communication interface 903, and a bus 904. The processor 901, the memory 902, and the communication interface 903 are coupled through the bus (not marked in the figure). The memory 902 stores instructions. When executable instructions in the memory 902 are executed, the compute device 900 performs the method performed by the compute device in the foregoing method embodiments.

The compute device 900 may be one or more integrated circuits configured to implement the foregoing methods, for example, one or more application-specific integrated circuits (application-specific integrated circuits, ASICs), one or more microprocessors (microprocessors), one or more field programmable gate arrays (field programmable gate arrays, FPGAs), or a combination of at least two of these integrated circuit forms. For another example, when the units in the apparatus are implemented in a form of a program scheduled by a processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

The processor 901 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 902 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example description rather than a limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 902 stores executable program code, and the processor 901 executes the executable program code to separately implement the functions of the foregoing units or modules, to implement the foregoing task processing method. In other words, the memory 902 stores instructions for performing the foregoing task processing method.

The communication interface 903 uses a transceiver module, for example but not limited to, a network interface card or a transceiver, to implement communication between the compute device 900 and another device or a communication network.

In addition to a data bus, the bus 904 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may be classified into an address bus, a data bus, a control bus, and the like.

FIG. 10 is a diagram of a compute device cluster according to an embodiment of this application. As shown in FIG. 10, the compute device cluster 1000 includes at least one compute device 900.

As shown in FIG. 10, the compute device cluster 1000 includes at least one compute device 900. Memories 902 in the one or more compute devices 900 in the compute device cluster 1000 may store same instructions used to perform the foregoing task processing method.

In some possible implementations, the memories 902 in the one or more compute devices 900 in the compute device cluster 1000 may alternatively separately store some instructions used to perform the task processing method. In other words, a combination of the one or more compute devices 900 may jointly execute the instructions for performing the foregoing task processing method.

It should be noted that the memories 902 in different compute devices 900 in the compute device cluster 1000 may store different instructions, and the different instructions are separately used to implement some functions of the task processing apparatus. In other words, the instructions stored in the memories 902 in different compute devices 900 may implement functions of one or more modules in a transceiver unit and a processing unit.

In some possible implementations, the one or more compute devices 900 in the compute device cluster 1000 may be connected through a network. The network may be a wide area network, a local area network, or the like.

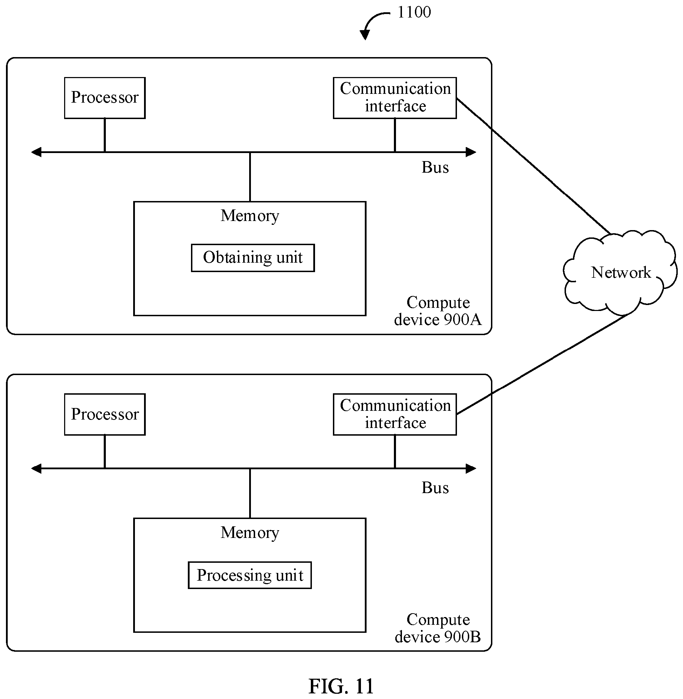

FIG. 11 is a diagram in which computer devices in a computer cluster are connected through a network according to an embodiment of this application. As shown in FIG. 11, a compute device 900A is connected to a compute device 900B through a network. Specifically, each compute device is connected to the network through a communication interface in the compute device.

In a possible implementation, a memory in the compute device 900A stores instructions for implementing a function of a transceiver unit. In addition, a memory in the compute device 900B stores instructions for implementing functions of a processing unit and a display unit.

It should be understood that a function of the compute device 900A shown in FIG. 11 may alternatively be completed by a plurality of compute devices. Similarly, a function of the compute device 900B may alternatively be completed by a plurality of compute devices.

In another embodiment of this application, a computer-readable storage medium is further provided. The computer-readable storage medium stores computer-executable instructions. When a processor of a device executes the computer-executable instructions, the device performs the method performed by the compute device in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the compute device in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments of this application, it should be understood that the disclosed system, apparatus, and method may be implemented in another manner. For example, the described apparatus embodiment is merely an example. For example, the division of the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A task processing method, applied to a compute device, wherein the method comprises:
obtaining a mathematical model expression and instance data of a to-be-solved problem, wherein the mathematical model expression comprises an objective function or a constraint condition, and the instance data indicates a value of a coefficient of the mathematical model expression;
decomposing the to-be-solved problem into N subproblems based on the mathematical model expression and the instance data of the to-be-solved problem; and
allocating, based on a computation amount of each of the N subproblems, the N subproblems to M threads for parallel execution, wherein N is greater than M, each of the M threads processes one or more subproblems, and a difference between computation amounts required by the M threads for respectively processing the one or more subproblems is less than or equal to a preset threshold.

2. The method according to claim 1, wherein the method further comprises:
calculating the computation amount of each of the N subproblems based on at least one piece of characteristic information and at least one weight of the N subproblems, wherein the weight indicates a weight of the at least one piece of characteristic information for calculating the computation amount, and the characteristic information comprises at least one of a problem type and a depth of each of the N subproblems.

3. The method according to claim 1 or 2, wherein the computation amount is indicated based on a quantity of thread iterations or thread processing time.

4. The method according to claim 2 or 3, wherein the characteristic information of the subproblems further comprises historical task idle information and a historical task balance degree, the historical task idle information comprises idle time after a thread executes a historical subproblem, the historical task balance degree comprises a difference between historical computation amounts for executing the historical subproblem by different threads, and the historical subproblem is a subproblem of a same problem type as the subproblem.

5. The method according to any one of claims 1 to 4, wherein the threads comprise a first thread and a second thread, the first thread and the second thread have a shared task pool, and subproblems in the shared task pool comprise a subproblem allocated to the first thread and a subproblem allocated to the second thread, and the method further comprises:
reallocating the subproblems in the shared task pool to the first thread or the second thread.

6. The method according to claim 5, wherein the reallocating the subproblems in the shared task pool to the first thread or the second thread comprises:
when the first thread is idle, reallocating a subproblem in a task pool corresponding to the second thread to the first thread for processing; or when the second thread is idle, reallocating a subproblem in a task pool corresponding to the first thread to the second thread for processing.

7. The method according to any one of claims 1 to 6, wherein before the calculating the computation amount of each of the N subproblems based on the at least one piece of characteristic information and the at least one weight of the N subproblems, the method further comprises:
generating the weight based on a machine model, wherein the machine model is a machine model obtained through training based on training data, and the training data comprises characteristic information of the historical subproblem and a weight corresponding to the characteristic information.

8. The method according to any one of claims 1 to 7, wherein the method further comprises:
when the threads execute the M subproblems and generate a plurality of secondary subproblems, calculating computation amounts of the secondary subproblems based on weights of the secondary subproblems; and
allocating the plurality of secondary subproblems to different threads for execution based on the computation amounts of the secondary subproblems.

9. The method according to any one of claims 1 to 8, wherein the method further comprises:
receiving a deterministic parameter configured by a user, wherein the deterministic parameter is used to control a quantity of iterations of one of the plurality of threads.

10. The method according to any one of claims 1 to 9, wherein the method further comprises:
collecting characteristic information of a training problem and a weight corresponding to the characteristic information, to generate first training data, wherein the training problem comprises the subproblems and the secondary subproblems; and
training the machine model based on the first training data.

11. The method according to any one of claims 1 to 10, wherein a ratio corresponding to the preset threshold is one of 0, 5%, and 10%; or when the computation amount is indicated based on the quantity of thread iterations, the threshold is one of 500 and 1000.

12. A task processing apparatus, wherein the apparatus comprises:
an obtaining unit, configured to obtain a mathematical model expression and instance data of a to-be-solved problem, wherein the mathematical model expression comprises an objective function or a constraint condition, and the instance data indicates a value of a coefficient of the mathematical model expression; and
a processing unit, configured to decompose the to-be-solved problem into N subproblems based on the mathematical model expression and the instance data of the to-be-solved problem; and
further configured to allocate, based on a computation amount of each of the N subproblems, the N subproblems to M threads for parallel execution, wherein N is greater than M, each of the M threads processes one or more subproblems, and a difference between computation amounts required by the M threads for respectively processing the one or more subproblems is less than or equal to a preset threshold.

13. The apparatus according to claim 12, wherein the processing unit is further configured to:
calculate the computation amount of each of the N subproblems based on at least one piece of characteristic information and at least one weight of the N subproblems, wherein the weight indicates a weight of the at least one piece of characteristic information for calculating the computation amount, and the characteristic information comprises at least one of a problem type and a depth of each of the N subproblems.

14. The apparatus according to claim 12 or 13, wherein the computation amount is indicated based on a quantity of thread iterations or thread processing time.

15. The apparatus according to claim 13 or 14, wherein the characteristic information of the subproblems further comprises historical task idle information and a historical task balance degree, the historical task idle information comprises idle time after a thread executes a historical subproblem, the historical task balance degree comprises a difference between historical computation amounts for executing the historical subproblem by different threads, and the historical subproblem is a subproblem of a same problem type as the subproblem.

16. The apparatus according to any one of claims 12 to 15, wherein the threads comprise a first thread and a second thread, the first thread and the second thread have a shared task pool, and subproblems in the shared task pool comprise a subproblem allocated to the first thread and a subproblem allocated to the second thread, and the processing unit is further configured to:
reallocate the subproblems in the shared task pool to the first thread or the second thread.

17. The apparatus according to claim 16, wherein the processing unit is specifically configured to:
when the first thread is idle, reallocate a subproblem in a task pool corresponding to the second thread to the first thread for processing; or when the second thread is idle, reallocate a subproblem in a task pool corresponding to the first thread to the second thread for processing.

18. The apparatus according to any one of claims 12 to 17, wherein the processing unit is specifically configured to:
generate the weight based on a machine model, wherein the machine model is a machine model obtained through training based on training data, and the training data comprises characteristic information of the historical subproblem and a weight corresponding to the characteristic information.

19. The apparatus according to any one of claims 12 to 18, wherein the processing unit is further configured to:
when the threads execute the M subproblems and generate a plurality of secondary subproblems, calculate computation amounts of the secondary subproblems based on weights of the secondary subproblems; and
allocate the plurality of secondary subproblems to different threads for execution based on the computation amounts of the secondary subproblems.

20. The apparatus according to any one of claims 12 to 19, wherein the processing unit is specifically configured to:
receive a deterministic parameter configured by a user, wherein the deterministic parameter is used to control a quantity of iterations of one of the plurality of threads.

21. The apparatus according to any one of claims 12 to 20, wherein the processing unit is further configured to:
collect characteristic information of a training problem and a weight corresponding to the characteristic information, to generate first training data, wherein the training problem comprises the subproblems and the secondary subproblems; and
train the machine model based on the first training data.

22. The apparatus according to any one of claims 12 to 21, wherein a ratio corresponding to the preset threshold is one of 0, 5%, and 10%; or when the computation amount is indicated based on the quantity of thread iterations, the threshold is one of 500 and 1000.

23. A compute device cluster, comprising at least one compute device, wherein each compute device comprises a processor and a memory, and the processor of the at least one compute device is configured to execute instructions stored in the memory of the at least one compute device, to cause the compute device cluster to perform the method according to any one of claims 1 to 11.

24. A computer program product comprising instructions, wherein when the instructions are executed by a compute device cluster, the compute device cluster is caused to perform the method according to any one of claims 1 to 11.

25. A computer-readable storage medium, comprising computer program instructions, wherein when the computer program instructions are executed by a compute device cluster, the compute device cluster performs the method according to any one of claims 1 to 11.
